# EUROPEAN PATENT SPECIFICATION

(11) **EP 0 905 430 B1**
(45) Date of publication and mention of the grant of the patent: **14.04.2010**
(21) Application number: 98305403.2
(22) Date of filing: 07.07.1998
(51) Int. Cl.: F16L 37/088, F16L 37/12

(54) **Connector**
Rohrkupplung
Raccord de tuyaux

(30) Priority: 30.09.1997 JP 26606197; 05.11.1997 JP 30284597; 05.11.1997 JP 30284697
(43) Date of publication of application: 31.03.1999
(73) Proprietor: Nitta Moore Company, Osaka-shi, Osaka (JP)
(72) Inventor: Shimada, Haruki, 1300-45 Yawata, Nabari-shi, Mie-ken (JP); Dogochi, Takeshi, 1300-45 Yawata, Nabari-shi, Mie-ken (JP); Nagai, Shinichi, 1300-45 Yawata, Nabari-shi, Mie-ken (JP); Saga, Shuichi, 1300-45 Yawata, Nabari-shi, Mie-ken (JP)
(74) Representative: Linn, Samuel Jonathan

(56) References cited:
- FR-A- 2 442 393
- US-A- 2 438 107
- US-A- 4 519 638
- US-A- 5 090 747
- US-A- 5 356 183
- US-A- 5 405 175
- US-A- 5 683 117

## Description

The present invention relates to a connector for detachably coupling a male member and a female member by insertion, and more specifically to a connector for coupling a male and a female member so as to allow fluid to pass therethrough.

A variety of connectors for detachably coupling a male and a female member by inserting the former into the latter have been developed. These connectors are often called quick connectors.

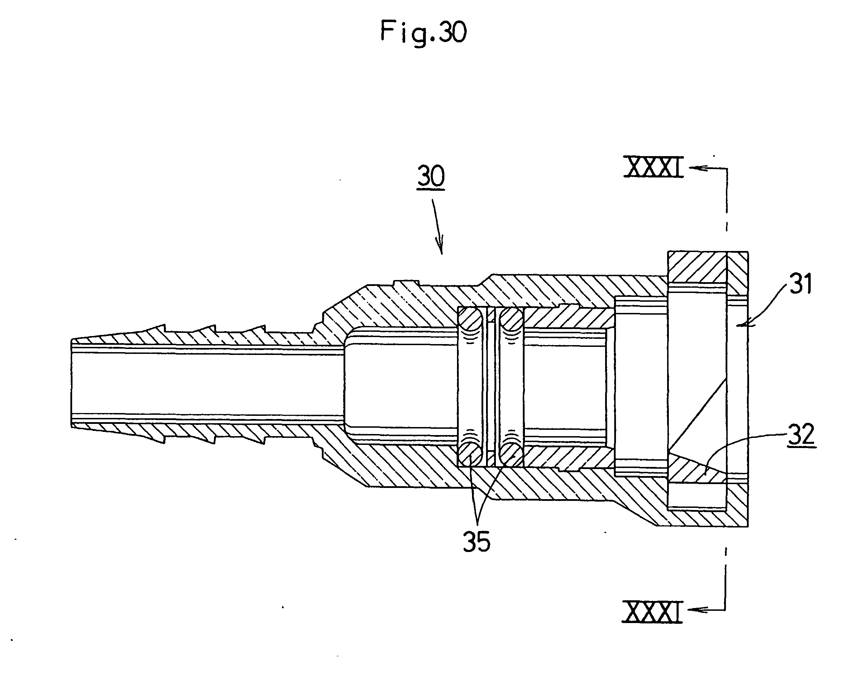

One example is shown in Figs. 30 to 32 of the accompanying drawings. In this connector, a bore space 31 of a female member 30 receives a male member 33 having an engaging portion 34 which is situated behind a manipulating ring 32.

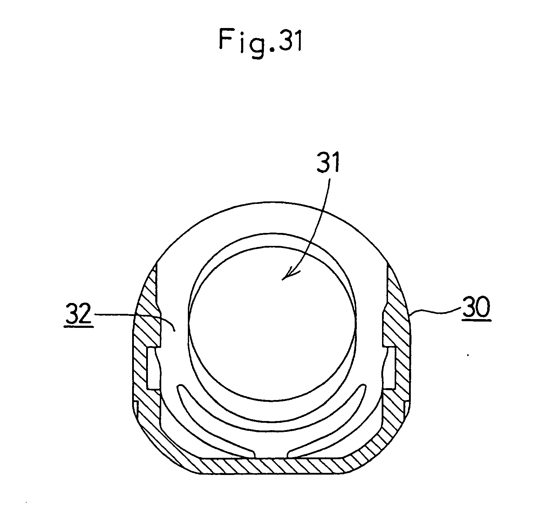

In its normal state, the manipulating ring 32 is located at a coupling position where the manipulating ring 32 is not coaxial with the female member 30. When attaching or detaching the male member 33, the manipulating ring 32 is moved into a male member receiving position (in a downward direction from that shown in Fig. 31) in which the manipulating ring 32 is substantially coaxial with the female member 30. Consequently, the bore space 31 of the female member 30 becomes clear for receiving the male member 33. Alternatively engagement between the engaging portion 34 of the male member 33 and the manipulating ring 32 is released for removing the male member 33.

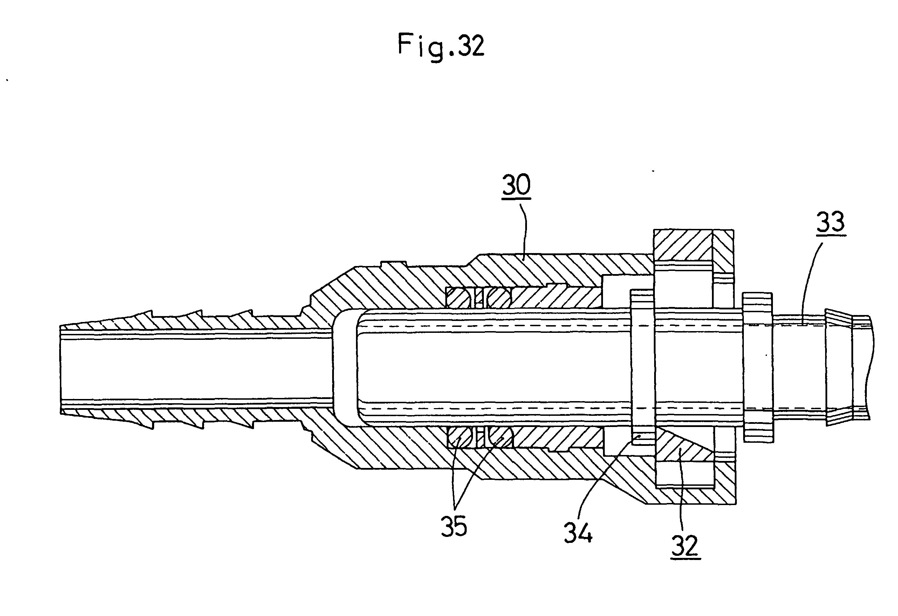

In the coupling position, the manipulating ring 32 experiences an eccentric force (in an upward direction as shown in Fig. 31), and engages the engaging portion 34 of the male member 33 only on one side (the lower part of the engaging portion 34 as shown in Fig. 32), like a cantilever. Therefore, when force acts on the male member 33 in a withdrawal direction, the coupling state is not stable.

US-A-5405175 discloses a connector for connecting a fuel tube to a fuel rail. The fuel rail acts as a female member into which the end of the fuel tube, acting as a male member, is received. The fuel rail has a slot therein, into which is received a clip with a fork into which the fuel tube is received. In US-A-5405175 the fuel tube has a flange which abuts against the clip, preventing the fuel tube being removed from the fuel rail, and the clip has catches thereon which engage the fuel rail and so hold the clip in the fuel rail.

US-A-5090747 discloses a connector in which male and female member are held together by locking members which are inserted into slots in the male member and which engage the female member. The locking members are biased into their engagement position and the female member is released by pushing the locking members inwardly, against their biasing. Thus this document corresponds to the pre-characterising part of claim 1.

In accordance with the invention, there is provided a connector comprising a female member having an inner space and a male member having an outer face engaging portion, the female member carrying in said inner space of said female member coupling means for detachably coupling the female and male members, said outer face engaging portion of said male member being receivable in the inner space through and behind the coupling means, said coupling means is a pair of separated manipulating members having respective portions for entering a track region (X) of said engaging portion of said male member and engaging with said engaging portion at a coupling position, wherein, for coupling or removing said male member with/from said female member, with said coupling means staying in said inner space, said pair of manipulating members are arranged to be retractable from the coupling position in which said portions of said manipulating members are entered in said track region (X) into a clear position in which they are clear of said track region (X);
wherein:
said manipulating members are each an integral body, comprising a manipulating base and a leg, said manipulating members being partly received within said
inner space and partly exposed outside said female member, said manipulating members being inserted into the female member from opposite sides, and whereby the retraction of the manipulating members from the coupling position is arranged to occur in the pushing together of their manipulating bases.

As used in this specification, the condition in which the pair of manipulating members are in the position of having entered the track region is referred to as the coupling (or coupled) position. When attaching or detaching the male member, the pair of manipulating members are moved in opposite directions so as to be retracted from the coupling position, and this clear position is referred to hereinbelow as the release position. As a result, in the release position the full track region through which the engaging portion passes becomes open. Alternatively, in the release position, when the male member has been engaged with the manipulating members,
such engagement is releasable.

Since the pair of manipulating members enter the track region inwardly from the respective opposite sides near the inner circumferential wall of the female member, the manipulating members and the engaging portion of the male member are engaged with each other on both opposite sides. Therefore, even when force in a withdrawal direction is applied to the male member, the coupling engagement in this connector is much more stable than in prior art connectors in which engagement on only one side is provided.

The pair of manipulating members may be formed separately from the female member, and may be designed to engage with retaining portions of a peripheral guide face of the inner space of the female member.

The pair of manipulating members may have respective resilient portions which cause the manipulating members to enter the track region in opposite inward directions from the opposite sides and remain there in their normal state.

When detaching or attaching the male member, upon resisting the resilient force of the resilient portions, the pair of manipulating members are moved in opposite directions so as to retreat from the coupling position in which the pair of manipulating members are entered in the track region of the engaging portion of the male member.

A preferred connector according to the invention, usable with a tubular male member provided with an engaging portion on its outer face, includes a tubular female member which is provided with a pair of manipulating members having respective joining portions which are engageable with the engaging portion and thus maintainable in a coupling condition with the male member. Each joining portion is provided with an abutment portion for limiting further outward movement of the respective joining portion at an axially displaced position in the coupling condition of the male and female members.

In the coupling condition of the above described preferred connector, when fluid pressure is applied, the joining portions which engage with the engaging portion of the male member and serve to maintain the coupled condition move in an axial direction under the force of the inner fluid pressure. The fluid pressure also acts on the joining portions to urge them outwardly. However, at the axially displaced position, the outward movement of the joining portions is prevented by the abutment portions of the manipulating members.

When coupling the male and female members together, the joining portions are moved outwardly and the male member is inserted into the female member. After this insertion, the joining portions are moved back to their previous normal positions to engage with the engaging portion of the male member. On the other hand, when disengaging the male and female members from each other, the joining portions are moved outwardly and the male member is drawn back from the female member.

In one preferred embodiment of the connector of the invention the abutment portion of the joining portion of each manipulating member is formed as a step, and an associated movement-arresting portion may be provided on the female member. In this structure, when the joining portion engages with the engaging portion of the male member and then moves axially due to inner fluid pressure, it also receives force to urge it outwardly. However, the abutment portion of the joining portion abuts the arresting portion of the female member, and thus resists associated movement of the arresting portion so as to prevent the joining portion from moving outwardly.

In an alternative preferred embodiment of the connector of the invention the abutment portion of the joining portion of each manipulating member is formed as a ramp. With this structure, inner fluid pressure moves the joining portion axially and then inwardly along the ramp. Therefore, due to inner fluid pressure the axial force on the joining portion may be transformed into a force to press and clasp the male member, and thereby an even more reliable coupling between the male and manipulating members may be obtained.

In a yet further alternative preferred embodiment of the connector of the invention, the connector comprises a pair of manipulating members which outwardly rotate and move to retreat from the coupling position. In the connector of this embodiment, when coupling and removing the male member, the pair of manipulating members are pushed in together and rotated and moved outwardly to retreat from the coupling position. The retreat by outward rotation and movement allows for enlargement of the size of the area over which the manipulating members enter the track region.

The pair of manipulating members are inserted in the female member from opposite sides, so that the insertion and removal of the male member can be achieved simply by pushing the pair of manipulating members together by an operator using a single hand. Thus better manoeuvrability may be obtained.

In this embodiment each of the pair of manipulating members may have an resilient joining portion and a resilient removal guide portion. By the thrusting action of both resilient portions, the pair of manipulating members may be maintained in engagement with the engaging portion of the male member. This simple structure of these resilient portions allows the manipulating members to be preferably maintained in the coupling condition. When coupling and removing the male member, the pair of manipulating members are moved so as to resist the resilient force of the resilient guide portions and thereby retreat from the coupling position. With this simple structure and manipulation, the manipulating members are easily moved to be retracted from the coupling position.

In accordance with yet another preferred embodiment of the connector of the invention, a further different type of manipulating member is provided. This manipulating member has a leg which enters the track region by about a half circular arc of the inner circumference of the female member. With this structure, the size of the area that the manipulating member occupies in the track region can be increased. As a result, a connector in which the male member is held by an even greater improved coupling strength may be provided.

In this particular embodiment each of the manipulating members may be provided with a resilient joining portion and a removal-preventing portion. The coupling condition in which the manipulating members invade the track region may thus be maintained by the thrusting action of the resilient joining portions thereof.

Furthermore, the inner ends of the leg of each of the pair of manipulating members may be designed to be stably put in place by engagement with and abutment against the other respective manipulating member. This assists in preventing loose engagement between them.

Practical examples of the connector of the present invention will now be described with respect to various preferred embodiments, with reference to the accompanying drawings, in which:
Fig. 1 is an axial partial sectional view showing sections of a female member, manipulating members and an O-ring, of a connector according to a first embodiment of the present invention;
Fig. 2 is an axial half-sectional view of the female member of the connector in Fig.1;
Fig.3 is a sectional view of the female member, taken along the line III-III in Fig. 2;
Fig. 4 is an axial half-sectional view of the male member and the O-ring of the connector in Fig. 1;
Fig. 5 is an exploded perspective view of the connector of Fig. 1 with no male member, with the section taken along the line V-V in Fig. 1;
Fig. 6 is a sectional view of the connector of Fig. 1 in a coupling state, taken along the V-V in Fig. 1;
Fig. 7 is a sectional view along the line V-V of the connector of Fig. 1 in a state where the engagement between the male and manipulation members is released;
Fig. 8 is an enlarged partial sectional view of an alternative connector in accordance with the first embodiment of the invention in a state where the male and female members are coupled;
Fig. 9 is an enlarged partial sectional view of the connector in Fig. 8 in a state where fluid pressure acts on the coupled female and male members;
Fig. 10 is an axial partial sectional view of a connector according to a second embodiment of the present invention is a released state in which the manipulating members are displaced outwardly and a male member is inserted in the female member;
Fig. 11 is an axial half-sectional view of the male member of the connector in Fig. 10;
Fig. 12 is an axial half-sectional view of the female member and the O-rings of the connector in Fig. 10;
Fig. 13 is a sectional view of the female member of the connector of Fig. 10, taken along the line XIII-XIII in Fig. 12;
Fig. 14 is a perspective view of one manipulating member of the connector in Fig. 10;
Fig. 15 is a perspective exploded view of the connector of Fig. 10 with no male member, with the section taken along the line XV-XV in Fig. 10;
Fig. 16 is a sectional view along the line XV-XV of the connector of Fig. 10 in a coupling state where the manipulating members engage with a protrusion of the male member;
Fig. 17 is a sectional view of the connector in the released state, taken along the line XV-XV in Fig. 10;
Fig. 18 is a partial enlarged axial sectional view showing the relationship between the female, male and manipulating members in Fig. 10;
Fig. 19 is a partial enlarged axial sectional view of the connector of Fig. 10 in a condition where the manipulating member resiliently transforms back to its normal state and engages with the protrusion of the male member.
Fig. 20 is a partially enlarged axial sectional view of the connector of Fig. 10 in a condition where the manipulating member engages with the protrusion of the male member and moves in axial and outward directions;
Fig. 21 is a partially enlarged axial sectional view of a connector according to a third embodiment of the present invention, in the same state as the connector shown in Fig. 20;
Fig. 22 is an axial partial sectional view of sections of a female member, manipulating members and an O-ring of a connector according to a fourth embodiment of the present invention;
Fig. 23 is an exploded perspective view of the connector of Fig. 22 with no male member, with the section taken along the line XXIII-XXIII in Fig. 22;
Fig. 24 is a sectional view along the line XXIII-XXIII of the connector in Fig. 22;
Fig. 25 is a sectional view along the line XXIII-XXIII of the connector of Fig. 22 in a condition where the engagement between the male and manipulating members is released;
Fig. 26 is an axial partial sectional view of sections of a female member, manipulating members and an O-ring of a connector according to a fifth embodiment of the present invention;
Fig. 27 is an exploded perspective view of the connector of Fig. 26 with no male member, with the section taken along the line XXVII-XXVII in Fig. 26;
Fig. 28 is a sectional view of the connector of Fig. 26 taken along the line XXVII-XXVII in Fig. 26;
Fig. 29 is a sectional view along the line XXVII-XXVII of the connector of Fig. 26 in a condition where the engagement between the male and the manipulating members is released;
Fig. 30 is an axial sectional view of a female member housing a manipulating ring in a conventional connector according to the prior art;
Fig. 31 is a sectional view along the line XXXI-XXXI of Fig. 30;
   and
Fig. 32 is an axial sectional view of the prior art connector of Fig. 30 showing a condition where a male member is coupled with the female member through the manipulating ring.

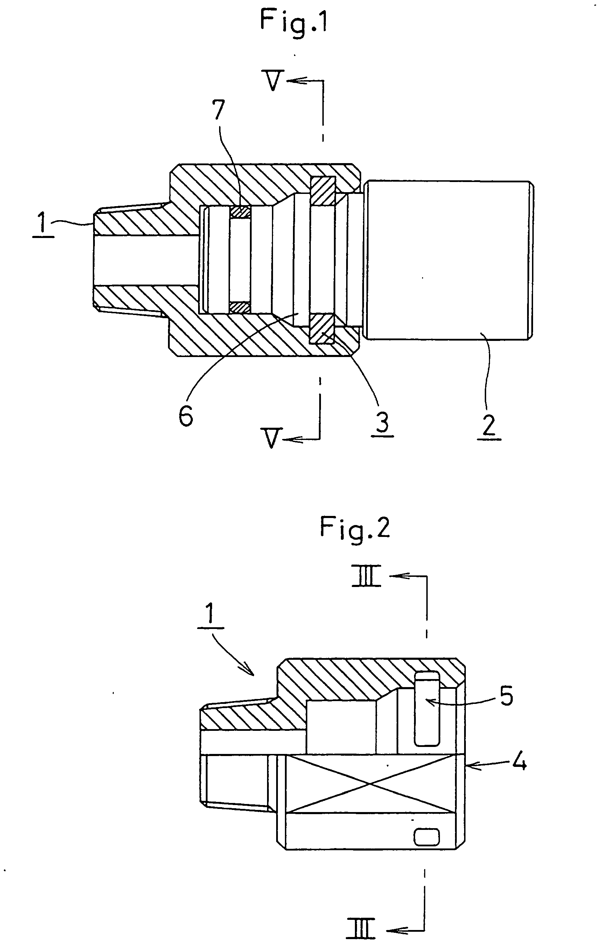

A connector of a first embodiment of the invention is shown in Figs. 1 to 7. This connector includes a female member 1 and a pair of manipulating members 3, and is for use with a male member 2.

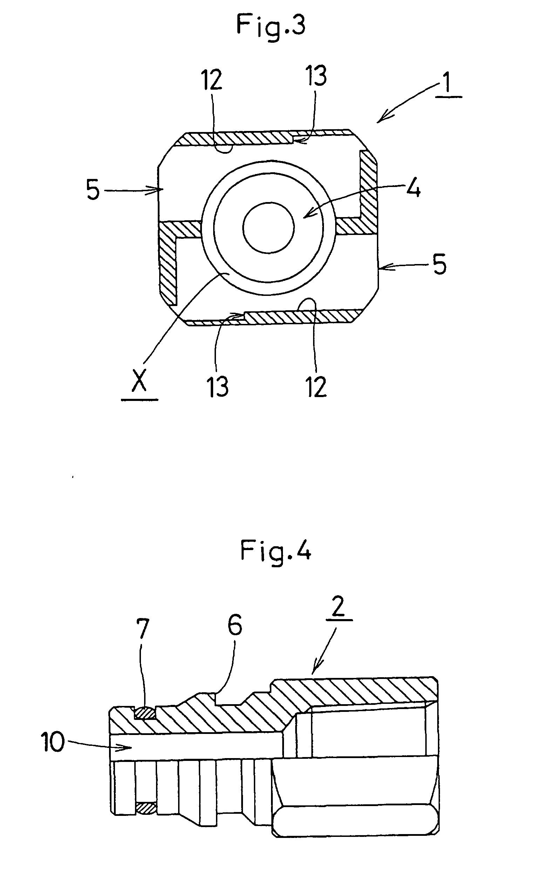

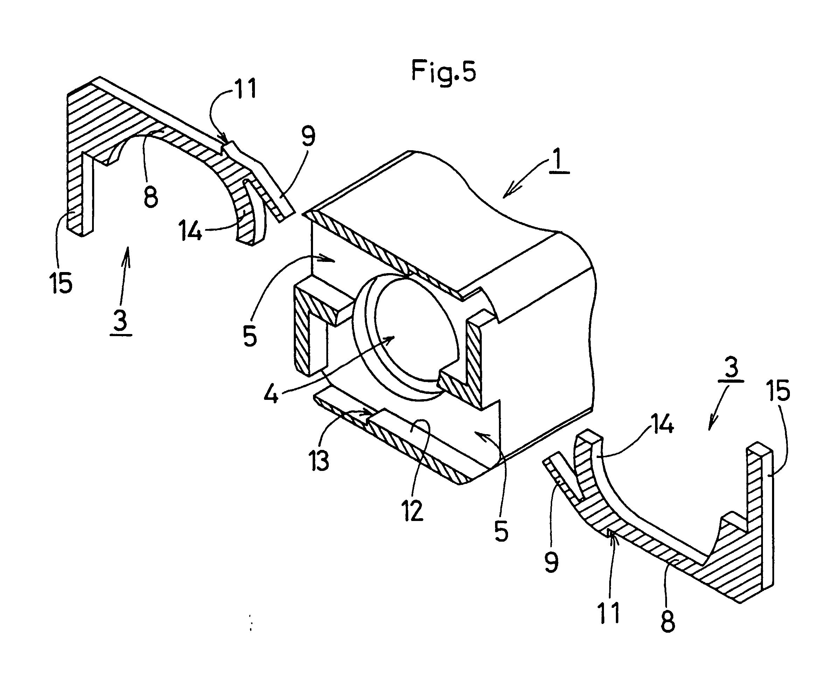

As shown in Fig. 5, the female member 1 has an inner space 4 and a pair of slits 5 provided in its peripheral wall. The pair of manipulating members 3 are inserted into the pair of slits 5 from opposite sides. The male member 2 has a flange-shaped engaging portion 6 on its outer face, as shown in Fig. 4. The inner space 4 of the female member 1 receives the male member 2 in such a manner as to accommodate the engaging portion 6 behind the pair of manipulating members 3. An O-ring 7 is provided between the female and male members 1, 2.

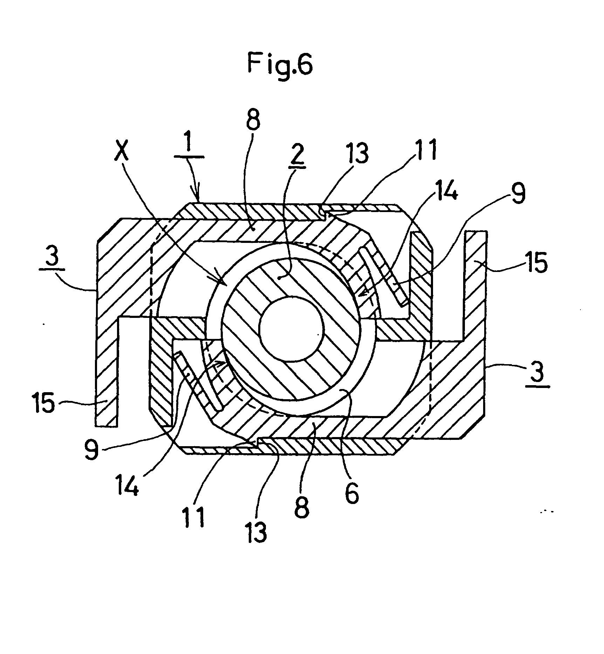

The pair of manipulating members 3 are made of resilient material discrete (i.e. made separately) from the female member 1. Each manipulating member 3 is formed principally with a manipulating base 15 and a leg 8 extending into the female member 1, and in a curved shape as a whole as illustrated in Fig. 5. The leg 8 is bifurcated at its inner end. The outer bifurcation is a resilient portion 9 and the inner bifurcation is a joining portion 14. Thus, the resilient portion 9 and the joining portion 14 integrally form the leg 8. As shown in Fig. 6, the joining portion 14 enters a track region X of the engaging portion 6 of the male member 2 by virtue of the resilient force of the resilient portion 9. The track region X denotes here an annular region made by the axial to-and-fro movement of the engaging portion 6 (in other words, the axial movement of the annular part X in Figs. 3, 6 and 7). In the condition shown in Fig. 6, respective joining portions 14 of the pair of manipulating members 3 enter the track region X in opposite inward directions from the inner peripheral wall of the female member 1.

Each manipulating member 3 further includes a protrusion 11 formed with a triangular section on an outer face of the leg 8. The protrusion 11 is designed to engage with a stepped portion 13 formed on a peripheral guide face 12 partly defining the inner space 4 of the female member 1. This engagement prevents abrupt removal of the manipulating members 3 from the female member 1.

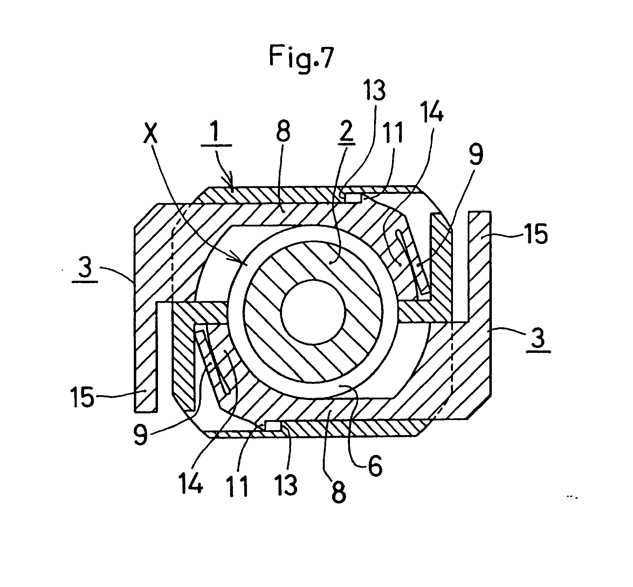

As shown in Fig. 7, when inserting or removing the male member 2, the manipulating bases 15 of the pair of manipulating members 3 are manually pressed in opposite inward directions resisting the resilient force of the resilient portions 9 so as to cause the joining portions 14 to move in opposite outward directions and retreat from the coupling position. As a result, the annular track region X becomes open or, if the engaging portion 6 has been engaged with the manipulating members 3, such engagement is released, and thereby the male member 1 may be inserted into or removed from the female member 1.

In this connector, the pair of manipulating members 3 enter the annular track region in respective opposite inward directions from the inner peripheral wall of the female member 1 and engage with the engaging portion 6 of the male member 2 on both opposite sides. Therefore, when force in a withdrawal direction is applied to the male member 2, as compared with the one-sided engagement in the conventional prior art connector, a much more stable coupling is advantageously obtained.

In the coupling condition in the prior art connector of Fig. 32, the manipulating ring 32 is always being pressed so as to be displaced in a specific direction (in a downward direction in the drawing). Therefore O-rings 35 placed between the male and female members 33, 30 experience force only in one single direction, and are therefore liable to deform in the course of time. With the connector according to the present invention, the male member 2 experiences force in opposite inward directions on both opposite sides, so that an uneven unidirectional force is not applied to the O-ring 7.

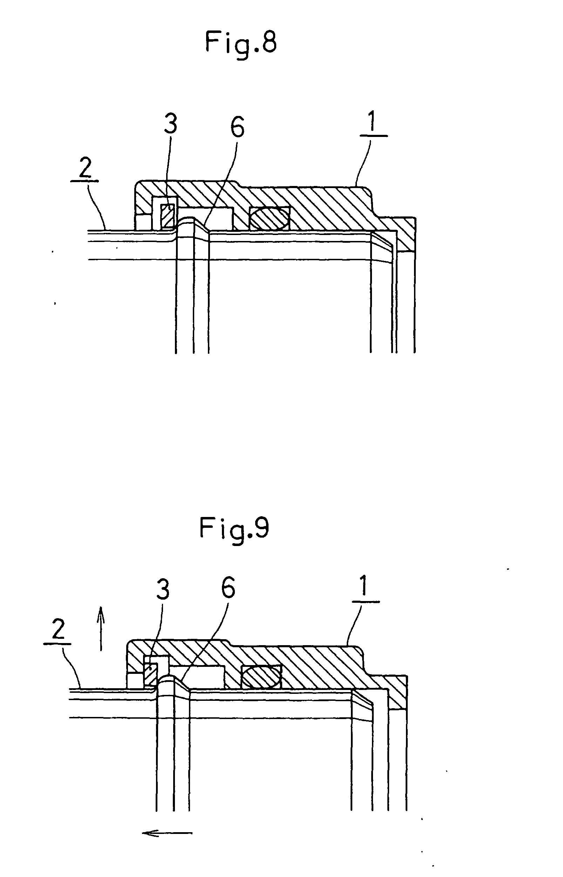

Fig. 8 shows another connector based on the same general idea as in the first embodiment of the invention, in a condition in which the female and male members 1, 2 are coupled by insertion. The annular protruding portion 6 (or the flange-shaped engaging portion 6) on the outer face of the male member 2 and the manipulating members 3 provided in the female member 1 are engaged and joined together. Fig. 9 shows the same connector in another coupling state, wherein fluid pressure is applied. Fluid pressure forces the manipulating members 3 not only in the axial direction but also outwardly (in an expanding direction), and thereby it may be possible for the coupling between the female and male members 1, 2 to become released, thereby causing the fluid to leak out.

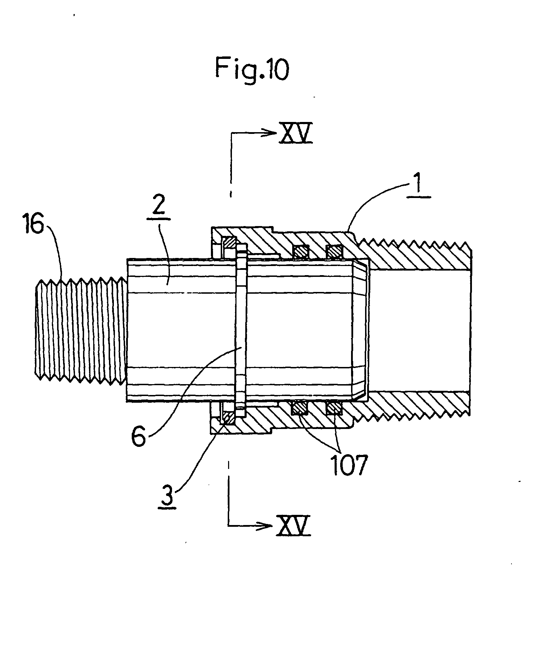

Thus, an improved connector, according to a second embodiment of the present invention, which solves or ameliorates the above problem and couples the female and male members 1, 2 more securely, is shown in Figs. 10 to 20. This connector includes a tubular female member 1 made of synthetic resin and a pair of manipulating members 3 made of synthetic resin, and is for use with a tubular member 2. The manipulating members 3 are inserted in the female member 1. This connector enables not only simple manipulation for attaching and detaching the male member 2 to and from the female member 1, but also provides a stable coupling of the two members 1, 2.

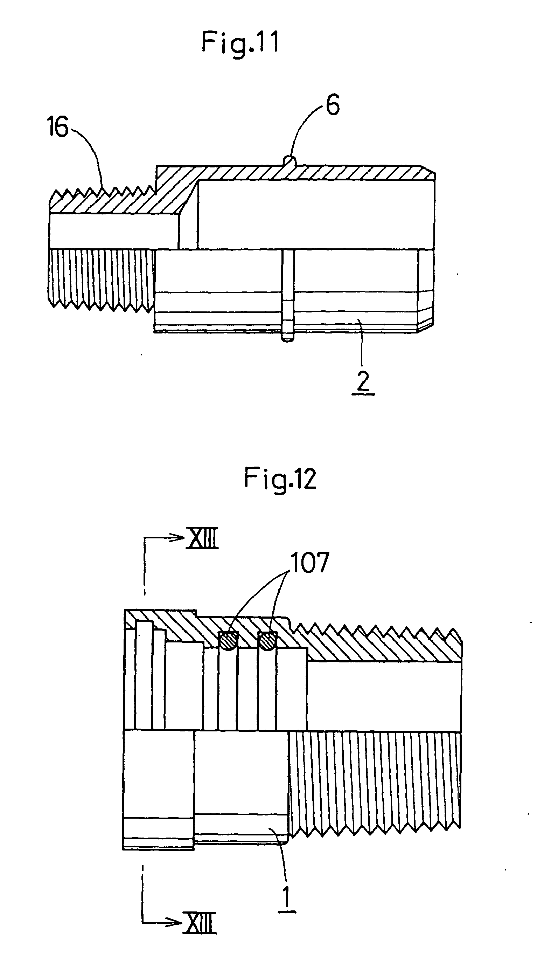

As shown in Figs. 10 and 11, the male member 2 has at one end a male threaded portion 16 for connection to an associated device, and on its outer circumferential face an annular engaging protruding portion 6 formed as a step. The male member 2 may have a second protruding portion (not shown) axially in front of (on the left hand side in Figs. 10 and 11) the first protruding portion 6, so that there is a recess between the two protruding portions, and which recess functions as another type of step.

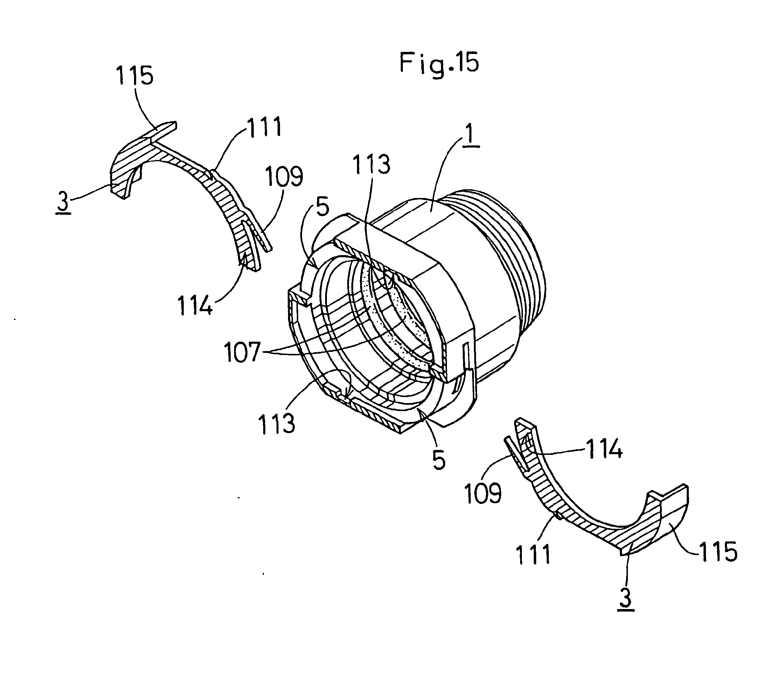

As shown in Figs. 10 and 12, the female member 1 accommodates two O-rings 107 therein, which lie between the female and male members 1, 2 when the latter is inserted into the former. As shown in Fig. 15, the female member 1 has two slits which are provided opposite one another and penetrating its peripheral wall. The pair of manipulating members 3 are inserted into the female member 1 through the slits in opposite inward directions. The female member 1 receives the protruding portion 6 of the male member 2 through and behind the pair of manipulating members 3.

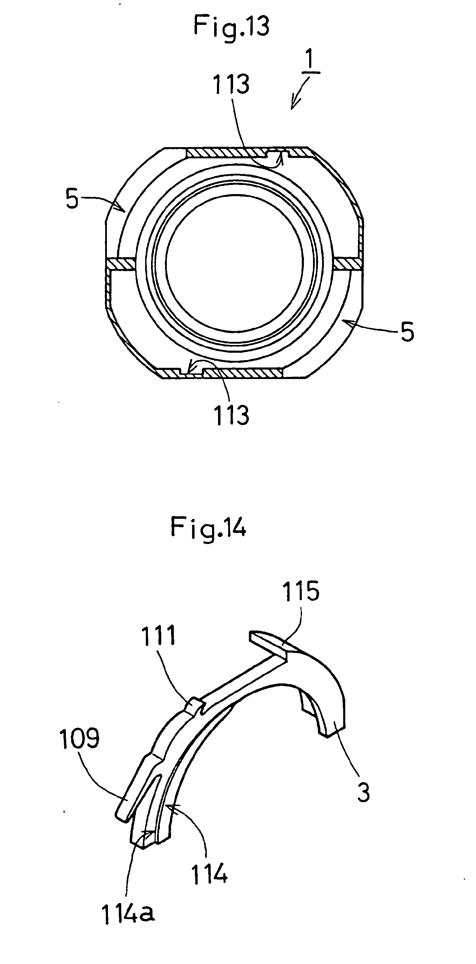

Referring to Figs. 14 and 15, each manipulating member 3 is formed in a substantially semi-arc shape and made of synthetic resin. Each manipulating member 3 has a manipulating base 115 and a leg extending into the inside of the female member 1. The leg is bifurcated at its inner end. The outer bifurcation is a resilient portion 109 and the inner bifurcation is a joining portion 114 which engages with the annular protruding portion 6 of the male member 2 so as to maintain the engagement therewith. Each manipulating member 3 further has a hook-like protrusion 111 on an outer side of the semi-arcuate leg section for engaging with an arresting portion 113 formed on a peripheral guide face partly defining the inner space of the female member 1. This engagement prevents abrupt removal of the manipulating member 3 from the female member 1.

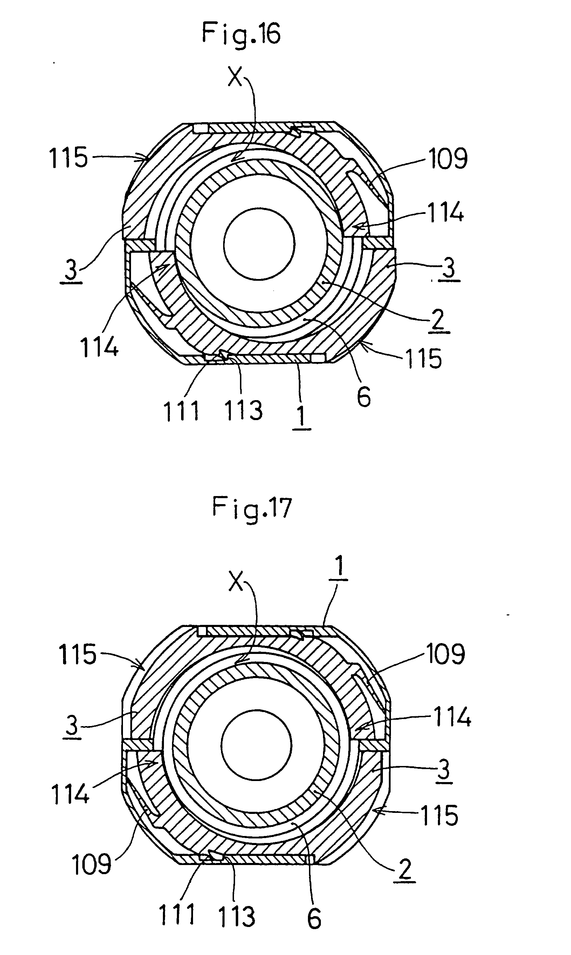

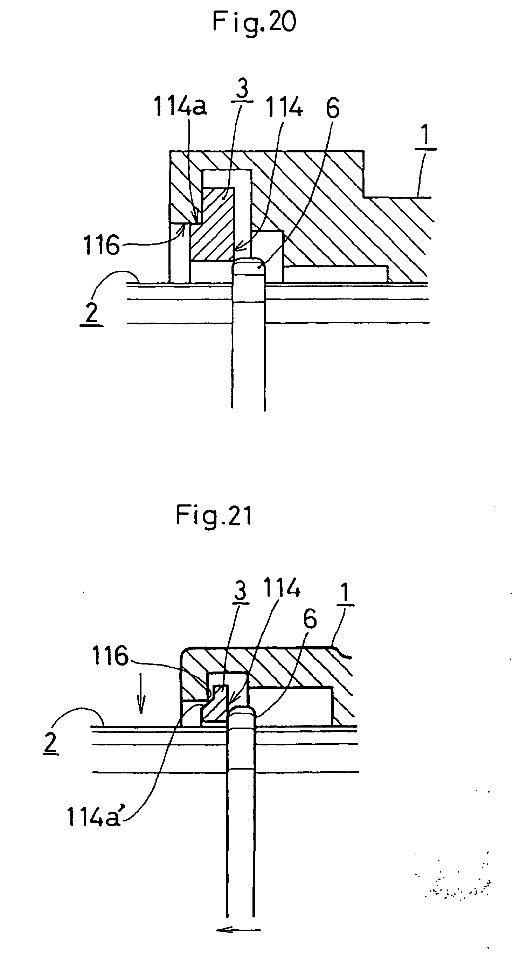

The joining portions 114 of the pair of manipulating members 3 enter the annular track region of the protruding portion 6 of the male member 2 as a result of the resilient urging force of the respective resilient portions 109. Here the track region is defined by the axial movement of the annular part X in Figure. 17. As shown in Figs. 14 and 18 to 20, each joining portion 114 is provided with an abutment portion 114a which limits the outward movement of the joining portion 114 when the joining portion 114 moves slightly in the axial direction in a coupling state of the female and male members 1, 2 in Fig. 20. Here "outward movement" denotes a movement in a radically outward or expanding direction in the whole connector, and the "axial movement" denotes a withdrawal movement of the male member 2.

The abutment portion 114a is shaped as a step. In the coupling state, fluid pressure is applied to the joining portion 114 to move it outwardly and axially. The joining portion 114 moves slightly to axially engage with the protruding portion 6 of the male member 2 and also moves outwardly under the force exerted by that pressure. However, this outward movement is prevented by the abutment of the abutment portion 114a against an associated movement-arresting part 116 of the female member 1.

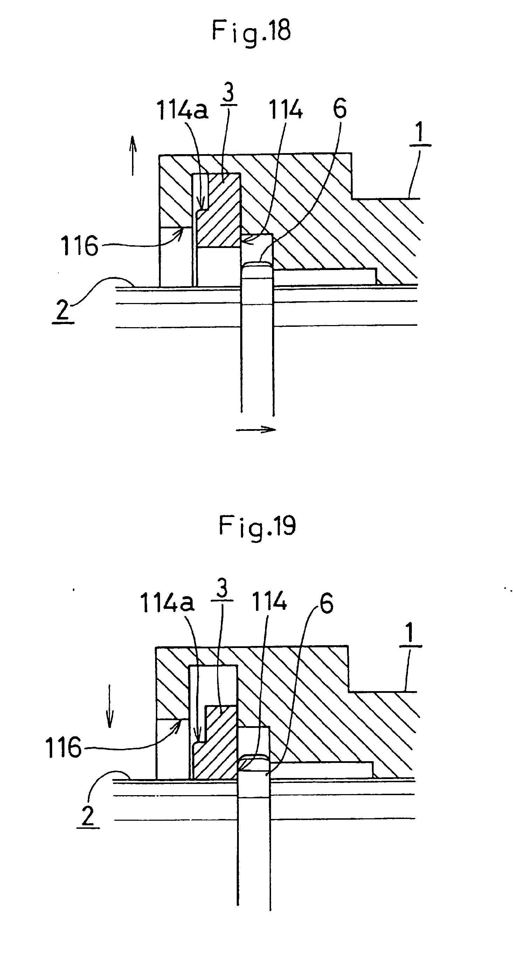

When detaching or attaching the male member 2, the manipulating bases 115 of the pair of manipulating members 3 are pushed in mutually opposite inward directions manually or with a tool (not shown), thereby resisting the resilient force exerted by the resilient portions 109 so that the pair of manipulating members 3 move to retreat from the coupling position in which the joining portions 114 have been within the track region. More specifically, when attaching the male member 2, the joining portions 114 are moved outwardly so as to be clear of the track region, the male member 2 is then inserted into the female member 1 (see Fig. 10), and then the joining portions 114 are allowed to elastically return to their normal coupling position where they engage with the protruding portion 6 of the male member 2, as shown in Fig. 19. When detaching the male member 2, the joining portions 114 are likewise moved outwardly to retreat from the coupling position, and then the male member 2 is pulled out.

In actual use, when fluid passes through the connector, the inner fluid pressure moves the joining portions 114, which engage with the male member 2 via its protruding portion 6, so as to maintain the engagement therewith at a slightly displaced position in the axial direction. Alternatively, in advance, the joining portions 114 may be moved together with the male member 2 so as to be slightly displaced in the axial direction with respect to the female member 1. At this axially displaced position, outward expanding movement of the joining portions 114 is limited by the abutment portions 114a. As a result, the coupling action between the joining portions 114 and the protruding portion 6 of the male member 1 is maintained securely as shown in Fig. 20.

It is therefore advantageous in the connectors of preferred embodiments of the present invention that abrupt disengagement of the male member 2 from the female member 1 is less likely to happen. It is further advantageous that engagement between the stepped abutment portions 114a of the joining portions 114 and the associated movement-arresting portions 116 of the female member 1 reliably limits further outward movement of the joining portions 114.

The male member 2 is readily removable from the female member 1 as follows. Fluid is stopped passing through the connector, the male member 2 in the axially displaced position is pushed back deeper into the female member 1 so as to release the engagement between the abutment portions 114a and the movement-arresting portions 116, the pair of manipulating members 3 are moved in opposite outward directions to retreat from the coupling position where the manipulating members 3 remain in the track region X and into a released position where the manipulating members 3 are disengaged from the protruding portion 6 of the male member 2 as shown in Fig. 10, and finally the male member 2 is pulled out from the female member 1.

Since the pair of manipulating members 3 enter the annular track region X from opposite sides of the inner space of the female member 1, the manipulating members 3 engage with the protruding portion 6 of the male member 2 on both opposite sides. Therefore, even when force in the withdrawal direction is applied to the male member 2, this two-sided coupling action is much more stable than the one-sided coupling in the prior art connector.

A connector according to a third embodiment of the present invention, as shown in Fig. 21, is described below, mainly pointing out the differences from the above described second embodiment connector.

The joining portion 114 of each manipulating member 3 in this third embodiment connector has a sloped abutment portion 114a', instead of a step as in the second embodiment connector. Consequently, when the joining portions 114 move together with the male member 2 in the axial direction due to the internal fluid pressure, the joining portions 114 also move in an inward contracting direction (in the downward direction as shown in Fig, 21) along the sloped abutment portion 114a' and thus press against the male member 2. Thus, the axial moving force of the joining portions 114 together with the male member 2 due to the inner fluid pressure is transformed into an engaging force which pressingly clasps the male member 2 via the joining portions 114. This advantageously provides an even greater reinforced coupling between the female and male members 1, 2.

Referring back to Figs. 6 and 7, the inner space of the female member 1 receives the engaging portion 6 of the male member 2 through and behind the pair of manipulating members 3. As indicated by the dotted line in Fig. 6, respective portions of the joining portions 14 of the manipulating members 3 enter the track region X of the engaging portion 6, when detaching or attaching the male member 2, the pair of manipulating members 3 are moved and urged in opposite directions towards their respective inner ends so that the joining portions 14 retreat from the coupling position and disengage from the engaging portion 6 of the male member 2.

The strength of the coupling of the male member 2 (in other words, the reliability against non-removal of the male member 2) depends on, for example, the size of the area of the portion of each joining portion 14 which enters and occupies the track region (as shown by the dotted line in Figs. 6 and 7). There has been a demand for enhancing the strength of the coupling between the female and male members 1, 2.

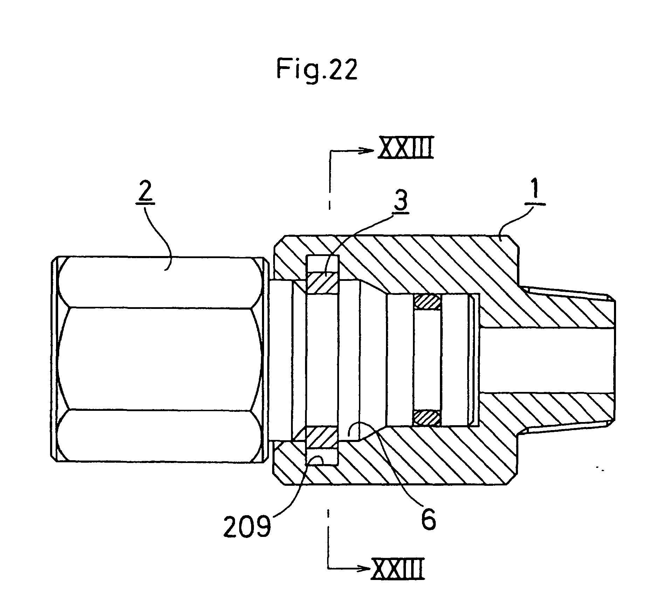

A connector for meeting the foregoing demand, according to a fourth embodiment of the present invention, is shown in Figs. 22 to 25. This connector, for use with a male member 2 having a passage 10 for fluid and a flange-shaped engaging portion 6 on its outer face, includes a synthetic resin female member 1 having an inner space and a pair of manipulating members 3. The female member 1 receives in its inner space the flange-shaped engaging portion 6 of the male member 2 through and behind the pair of manipulating members 3. The female member 1 also receives the pair of manipulating members 3 from opposite sides.

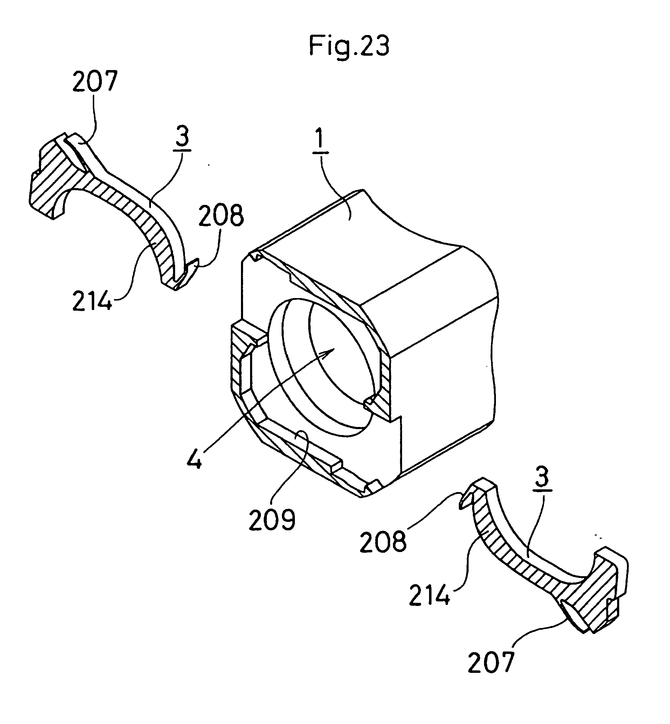

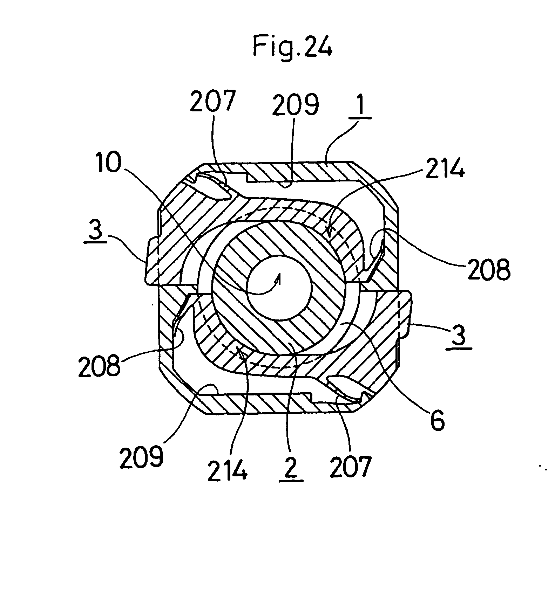

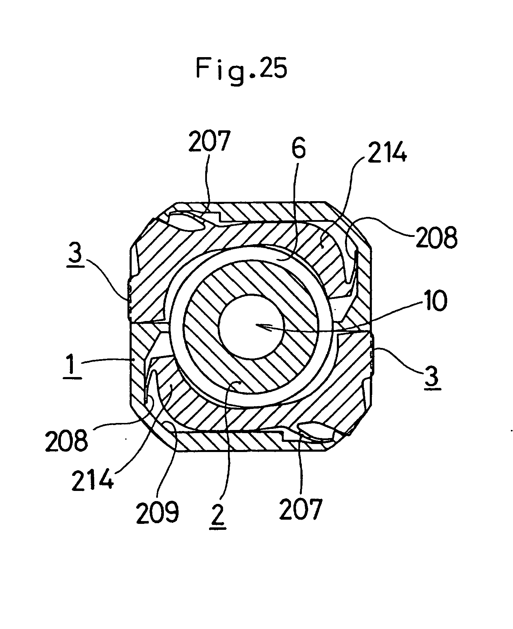

As shown in Fig. 23, the manipulating members 3 are provided with joining portions 214 at inner end portions thereof. The respective joining portions 214 enter a track region of the engaging portion 6, as shown in Fig. 24. Each of the manipulating members 3 also has resilient joining portion 207 and a resilient guide portion 208. These resilient portions 207, 208 each abut an inner peripheral face 209 of the female member 1, and the thrusting forces of these resilient portions 207, 208 enable a coupling state to be maintained in which the manipulating members 3 enter the track region. As shown in Fig. 24, in the coupling condition the manipulating members 3 are designed to extend on and along the outer face of the male member 2 and engage with it over a large area, while, as shown in Fig. 25, in a released condition, the respective manipulating members 3 move rotatably to retreat from the coupling position.

When detaching or attaching the male member 2, bases of the manipulating members 3 are pushed inwardly so that the manipulating members 3 rotate and move outwardly to retreat from the coupling position in which the manipulating members enter the track region, and thereby the full track region becomes open for either receiving the male member 2 or enabling the engagement between the manipulating members 3 and the engaging portion 6 to become released. Thus, upon resisting the thrusting force of the resilient joining and removal guide portions 207, 208, the manipulating members 3 are displaced to retreat from the coupling position.

In this fourth embodiment of the connector of the invention, the pair of manipulating members 3 are designed to rotate and move outwardly to retreat from the coupling position. On the other hand, for instance, in the above described first embodiment connector, the manipulating members 3 are pushed at their bases 15 and moved directly toward the opposite inner wall sides of the female member, as shown in Figs. 6 and 7. Compared with the first embodiment, the manipulating members 3 of the fourth embodiment may have a larger engaging area between portions which the manipulating members 3 enter and occupy in the track region and which engage with the engaging portion 6, i.e. the area of the portions along the inserting directions of the manipulating members 3. The portions here mean the central upper and lower portions of the engaging area which are shown engaged with the engaging portion 6 in Fig. 24, but not engaged therewith in Fig. 6. Consequently, the connector of this fourth embodiment may provide an enhanced coupling strength in comparison with that of the first embodiment.

Furthermore, since the pair of manipulating members 3 are inserted into the female member 1 in opposite inward directions and designed to be maintained in the coupling position in their normal state, attachment and detachment of the male member 2 into and out of the female member 1 can be readily conducted by inserting the male member 2 into the female member 1 or pulling the former out of the latter by an operator using one hand while pushing the pair of manipulating members 3 into the female member 1 using the other hand. Thus the manner of manipulation is very simple.

Simple structures of the resilient coupling and guide portions 207, 208 advantageously allow the manipulating members 3 to reliably maintain the coupling condition where the joining portions 214 remain in the track region. This simple structure as well as the simple manipulation of the manipulating members 3 permit the easy retreat of the manipulating members 3 from the coupling position.

Moreover, since the pair of manipulating members 3 are designed to rotate and move outwardly when being pushed into the female member 2, the length thereof in the insertion direction may be set shorter than that in the connector of the first embodiment. The difference can be seen by comparing Figs. 6 and 24.

Referring again back to Figs. 6 and 7, each of the joining portions 14 of the manipulating members 3 enters the track region by about a quarter circular arc thereof. As already mentioned above, the reliability of the coupling with the male member 2 depends on, for instance, the size of the area which the manipulating members 3 occupy in the track region.

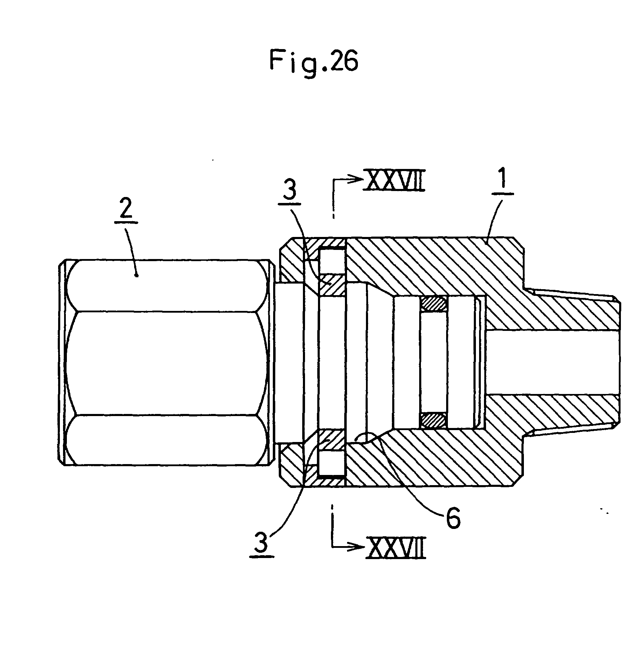

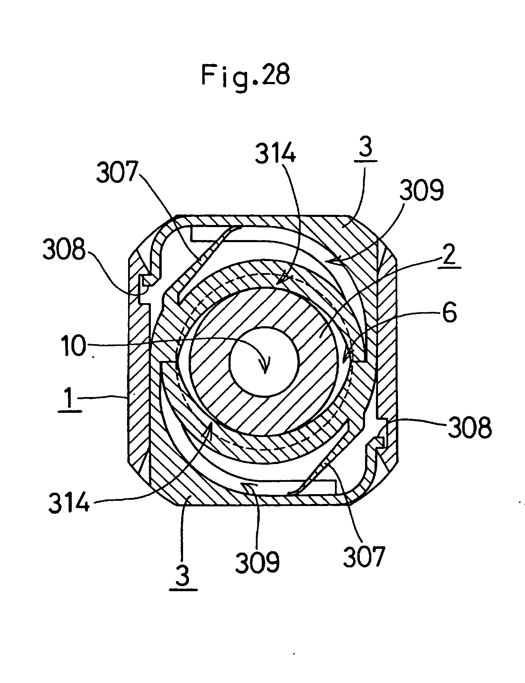

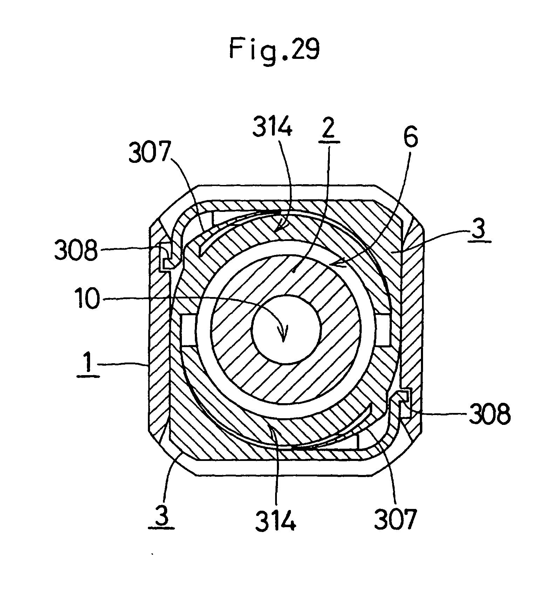

A fifth embodiment connector according to the present invention, which is capable of an even more reliable coupling of the female and male members 1, 2, is illustrated in Figs. 26 to 29. As before, this connector includes a synthetic resin female member 1, a pair of manipulating members 3, and is for detachably coupling to a male member having a fluid passage 10.

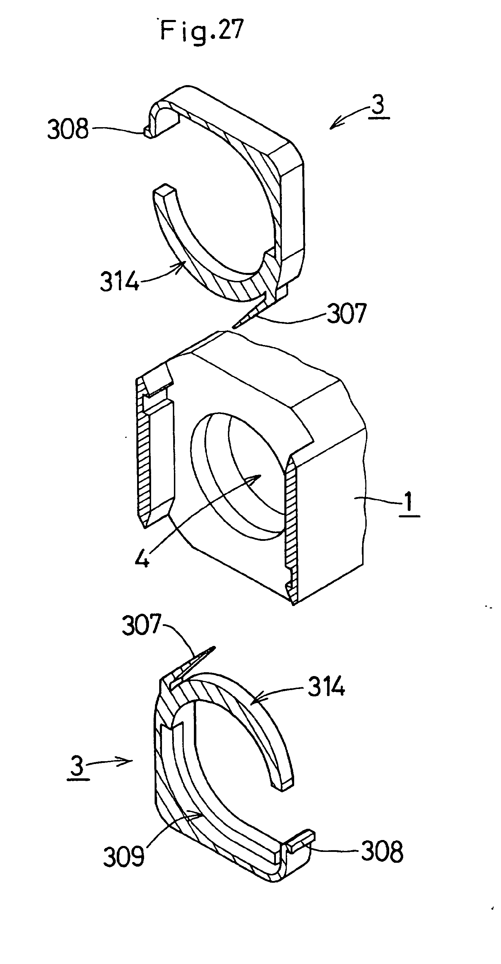

The female member receives in its inner space the engaging portion 6 of the male member 2 through and behind the manipulating members 3. The pair of manipulating members 3 are inserted in the female member 1 from opposite sides. As shown in Fig. 27, each manipulating member 3 includes a resilient joining portion 307, a removal-preventing portion 308 and a joining portion 314. The joining portion 314 enters the annular track region by about a half circular arc thereof. This coupling position is maintained by the thrusting action of the resilient joining portions 307. The joining portion 314 of each manipulating member 3 abuts an associated stepped part 309 provided on the other respective manipulating member 3.

When detaching or attaching the male member 2, the joining portions 314 of the pair of manipulating members 3 are moved to retreat from the coupling position so as to clear the full track region of the engaging portion 6.

In this fifth embodiment connector, each joining portion 314 enters the annular track region and occupies about a half circular arc thereof and thus the size of the area which the joining portion 314 occupies in the track region is increased. Therefore, an even more reliable coupling between the female and male members 1, 2, is obtained.

Moreover, the thrusting action of the simply constructed resilient joining portions 307 maintain the male member 2 and the manipulating members 3 in the coupling condition. Therefore, such a simple structure of the resilient joining portions 307 enables the coupling condition to be reliably maintained.

In addition, the joining portion 314 of each of the pair of manipulating members 3 is designed to engage with the respective associated stepped portion 309 on the other of the pair of manipulating members 3 and to be positioned stably with respect to each other. Therefore loose engagement between the pair of manipulating members 3 is effectively prevented. Furthermore, the pair of manipulating members 3 are designed to be hooked on the female member 1 by the removal-preventing portions 308 symmetrically as a whole, and thereby stability and simplicity of the whole assembly are achieved.

Furthermore, since the pair of manipulating members 3 are inserted into the female member 1 from opposite sides, the connectors according to the invention are very easy to manipulate. Thus, attachment and detachment of the female and male members 1, 2 can be readily conducted by pushing the pair of manipulating members 3 together into the female member 1 by an operator using just one hand and simultaneously pulling the male member 2 out of or inserting it into the female member 1 , as the case may be, using the other hand.

As described above, in the connector according to the present invention, since the engaging portion 6 of the male member 2 is engaged with the manipulating members 3 on both opposite sides in opposite inward directions from the inner circumferential wall of the female member 1, a more reliable coupling than in the prior art connectors can be obtained even when force in the withdrawal direction is applied on the male member 1.

## Claims

1. A connector comprising a female member (1) having an inner space (4) and a male member (2) having an outer face engaging portion (6), the female member (1) carrying in said inner space (4) of said female member (1) coupling means for detachably coupling the female and male members (1, 2), said outer face engaging portion (6) of said male member (2) being receivable in the inner space (4) through and behind the coupling means, said coupling means is a pair of separated manipulating members (3) having respective portions (14) for entering a track region (X) of said engaging portion (6) of said male member (2) and engaging with said engaging portion (6) at a coupling position, wherein, for coupling or removing said male member (2) with/from said female member (1), with said coupling means staying in said inner space (4), said pair of manipulating members (3) are arranged to be retractable from the coupling position in which said portions (14) of said manipulating members (3) are entered in said track region (X) into a clear position in which they are clear of said track region (X)
**characterised in that**:
said manipulating members (3) are each an integral body, comprising a manipulating base and a leg, said manipulating members (3) being partly received within said inner space and partly exposed outside said female member (1), said manipulating members (3) being inserted into the female member (1) from opposite sides, and whereby the retraction of the manipulating members (3) from the coupling position is arranged to occur in the pushing together of their manipulating bases.

2. A connector according to claim 1, wherein the manipulating members are disposed independently of each other.

3. A connector according to claim 1 or claim 2, wherein said respective portions (14) of said manipulating members (3) are constructed and arranged for entering said track region (X) in respective opposite inward directions from an inner peripheral wall of said female member (1), and are movable in opposite outward directions toward said inner peripheral wall so as to be retractable from said coupling position.

4. A connector according to any one of claims 1 to 3, wherein said pair of manipulating members (3) are formed separately from said female member (1) and are retained by respective step portions (13) provided on a peripheral guide wall (12) of said inner space (4).

5. A connector according to any one of claims 1 to 4, wherein each of said pair of manipulating members (3) is provided with a resilient portion (9) by which said manipulating members (3) are maintained normally in said coupling position.

6. A connector according to claim 5, wherein for coupling and removing said male member (2), said pair of manipulating members (3) are movable such as to resist the resilient force of said resilient portions (9).

7. A connector according to claim 1 or claim 6 wherein said manipulating members (3) are movable rotatably and in outward directions so as to be retractable from said coupling position.

8. A connector according to claim 7,
wherein each of said manipulating members (3) is provided with a resilient joining portion (207) and a resilient guide portion (208) and the resilient urging force provided by said resilient joining and guide portions (207, 208) allows said manipulating members (3) to be maintainable in said coupling position.

9. A connector according to claim 8, wherein for coupling and removing said male member (2), said manipulating members (3) are movable against said resilient force of said resilient portions (207, 208) so as to be retractable from said coupling position.

10. A connector according to claim 1 wherein said respective portions (314) of said manipulating members (3) are constructed and arranged so as to be able to enter said track region (X) by about a half circular arc thereof and engage with said engaging portion (6) of the male member (2).

11. A connector according to claim 10, wherein each of said manipulating members (3) is provided with a resilient joining portion (307) and a removal-preventing portion (308) and is maintainable in said coupling position by means of the resilient force provided by said joining portion (307).

12. A connector according to claim 10 or claim 11, wherein each of said manipulating members (3) is mutually positionable by means of abutment of a respective inner end portion thereof on the other of said manipulating members (3).

13. A connector according to any one of the preceding claims, wherein each of said manipulating members (3) is provided with a joining portion (114) for engaging with said engaging portion (6) of the male member (2) for maintaining a coupling state between said female and male members (1, 2), and each of said joining portion (114) is provided with an abutment portion (114a) for limiting an outward movement of said joining portion (114) to the clear position at an axially displaced position in the coupling state under fluid pressure.

14. A connector according to claim 13, wherein each said abutment portion (114a) is formed as a step and said female member (1) is provided with a movement-arresting portion (116) for engaging with said abutment portion (114a) for preventing said outward movement of each said joining portion (114)

15. A connector according to claim 13, wherein each said abutment portion (114a) is formed as a ramp and, upon axial movement of said joining portion (114) resulting from exertion of a fluid pressure within the connector, each said joining portion (114) moves inwardly along said ramp and is urged against the engaging portion (6) of said male member (2).

16. A connector according to any one of the preceding claims, wherein said engaging portion (6) of said male member (2) is a protruding portion.

## Patentansprüche

1. Verbindungsstück, umfassend ein aufnehmendes Element (1) mit einem Innenraum (4) und ein Steckerelement (2) mit einem Eingriffsabschnitt an der Außenfläche (6), wobei das aufnehmende Element (1) in dem Innenraum (4) des aufnehmenden Elements ein Verbindungsmittel zur lösbaren Verbindung des aufnehmenden Elements und des Steckerelements (1, 2) aufweist, wobei der Eingriffsabschnitt an der Außenfläche (6) des Steckerelements (2) in dem Innenraum (4) durch und hinter dem Verbindungsmittel aufnehmbar ist, wobei das Verbindungsmittel durch ein Paar separater Bedienungselemente (3) mit entsprechenden Abschnitten (14) gebildet ist, um in einen Bahnbereich (X) des Eingriffabschnitts (6) des Steckerelements (2) eingeführt werden zu können und mit dem Eingriffsabschnitt (6) in einer Verbindungsposition in Eingriff zu gelangen,
wobei das Paar von Betätigungselementen (3) zur Verbindung oder Entfernung des Steckerelements (2) mit/von dem aufnehmenden Element (1), wobei das Verbindungsmittel in dem Innenraum (4) verbleibt, so angeordnet ist, das diese aus der Verbindungsposition, in der die Abschnitte (14) der Betätigungselemente (3) in den Bahnbereich (X) eingeführt sind, in eine Freigabeposition zurückgezogen werden können, in der sie außerhalb des Bahnbereichs (X) vorliegen,
**dadurch gekennzeichnet, dass**:
die Betätigungselemente (3) jeweils einstückig ausgebildet sind und eine Betätigungsbasis und einen Schenkel umfassen, wobei die Betätigungselemente (3) teilweise in dem Innenraum aufgenommen sind und teilweise außerhalb des aufnehmenden Elements (1) frei liegen, wobei die Betätigungselemente (3) von gegenüberliegenden Seiten aus in das aufnehmende Element (1) eingeführt werden und wobei das Zurückziehen der Betätigungselemente (3) aus der Verbindungsposition **dadurch** erfolgt, dass ihre Betätigungsbasen zusammengedrückt werden.

2. Verbindungsstück nach Anspruch 1, worin die Betätigungselemente unabhängig voneinander angeordnet sind.

3. Verbindungsstück nach Anspruch 1 oder 2, worin die entsprechenden Abschnitte (14) der Betätigungselemente (3) so ausgebildet und angeordnet sind, dass sie in entgegengesetzte, nach innen gerichtete Richtungen von einer inneren Umfangswand des aufnehmenden Elements (1) in den Bahnbereich (X) eingeführt werden und in entgegengesetzten nach außen gerichteten Richtungen in Richtung der inneren Umfangswand bewegbar sind, um aus der Verbindungsposition zurückziehbar zu sein.

4. Verbindungsstück nach einem der Ansprüche 1 bis 3, worin das Paar an Betätigungselementen (3) getrennt von dem aufnehmenden Element (3) ausgebildet ist und durch entsprechende Stufenabschnitte (13) gehalten wird, die auf einer Umfangsführungswand (12) des Innenraums (4) bereitgestellt sind.

5. Verbindungsstück nach einem der Ansprüche 1 bis 4, worin jedes des Paars an Betätigungselementen (3) mit einem Federabschnitt (9) bereitgestellt ist, durch das die Betätigungselemente (3) gewöhnlicherweise in der Verbindungsposition gehalten werden.

6. Verbindungsstück nach Anspruch 5, worin das Paar an Betätigungselementen (3) zum Verbinden und Entfernen des Steckerelements (2) bewegbar ist, um der Federkraft der Federabschnitte (9) entgegenzuwirken.

7. Verbindungsstück nach Anspruch 1 oder 6, worin die Betätigungselemente (3) drehbar und nach außen bewegbar sind, um aus der Verbindungsposition zurückziehbar zu sein.

8. Verbindungsstück nach Anspruch 7, worin jedes der Betätigungselemente (3) mit einem Federverbindungsabschnitt (207) und einem Federführungsabscnitt (208) bereitgestellt ist und die durch die Federverbindungs- und Federführungsabschnitte (207, 208) bereitgestellte Federkraft ermöglicht, dass die Betätigungselemente (3) in der Verbindungsposition haltbar sind.

9. Verbindungsstück nach Anspruch 8, worin die Betätigungselemente (3) zur Verbindung und Entfernung des Steckerelements (2) gegen die Federkraft der Federabschnitte (207, 208) bewegbar ist, um aus der Verbindungsposition zurückziehbar zu sein.

10. Verbindungsstück nach Anspruch 1, worin die entsprechenden Abschnitte (314) der Betätigungselemente (3) so ausgebildet und angeordnet sind, dass sie in den Bahnbereich (X) bis etwa zur Hälfte eines Kreisbogens davon eingeführt werden und mit dem Eingriffsabschnitt (6) des Steckerelements (2) in Eingriff gelangen können.

11. Verbindungsstück nach Anspruch 10, worin jedes der Betätigungselemente (3) mit einem Federverbindungsabschnitt (307) und einem Abschnitt zur Verhinderung der Entfernung (308) bereitgestellt ist und durch die durch den Verbindungsabschnitt (307) bereitgestellte Federkraft in der Verbindungsposition haltbar ist.

12. Verbindungsstück nach Anspruch 10 oder 11, worin die Betätigungselemente (3) durch das Anstoßen eines inneren Endabschnitts eines Betätigungselements (3) an das andere Betätigungselement (3) in Bezug aufeinander positionierbar sind.

13. Verbindungsstück nach einem der vorangegangenen Ansprüche, worin jedes der Betätigungselemente (3) mit einem Verbindungsabschnitt (114) bereitgestellt ist, um mit dem Eingriffsabschnitt (6) des Steckerelements (2) in Eingriff zu gelangen, um einen Verbindungszustand zwischen dem aufnehmenden Element (1) und dem Steckerelement (2) aufrecht zu erhalten, und worin jeder der Verbindungsabschnitte (114) mit einem Anschlagabschnitt (114a) bereitgestellt ist, um die Bewegung des Verbindungsabschnitts (114) nach außen in die Freigabeposition in einer axial verschobenen Position im Verbindungszustand unter Fluiddruck einzuschränken.

14. Verbindungsstück nach Anspruch 13, worin jeder der Anschlagabschnitte (114a) in Form einer Stufe ausgebildet ist und das aufnehmende Element (1) mit einem Bewegungsarretierungsabschnitt (116) bereitgestellt ist, der mit dem Anschlagabschnitt (114a) in Eingriff gelangt, um die Bewegung jedes Verbindungsabschnitts (114) nach außen zu verhindern.

15. Verbindungsstück nach Anspruch 13, worin jeder der Anschlagsabschnitte (114a) in Form einer Rampe ausgebildet ist und sich jeder Verbindungsabschnitt (114) bei einer axialen Bewegung des Verbindungsabschnitts (114), die aus der Ausübung eines Fluiddrucks innerhalb des Verbindungsstücks resultiert, entlang der Rampe nach innen bewegt und gegen den Eingriffsabschnitt (6) des Steckerelements (2) gedrückt wird.

16. Verbindungsstück nach einem der vorangegangenen Ansprüche, worin der Eingriffsabschnitt (6) des Steckerelements (2) ein vorstehender Abschnitt ist.

## Revendications

1. Connecteur comprenant un élément femelle (1) ayant un espace interne (4) et un élément mâle (2) ayant une partie de mise en prise de face externe (6), l'élément femelle (1) supportant dans ledit espace interne (4) dudit élément femelle (1), des moyens de couplage pour coupler de manière détachable les éléments femelle et mâle (1, 2), ladite partie de mise en prise de face externe (6) dudit élément mâle (2) pouvant être reçue dans l'espace interne (4) à travers et derrière les moyens de couplage, lesdits moyens de couplage sont une paire d'éléments de manipulation séparés (3) ayant des parties (14) respectives pour entrer dans une région de cheminement (X) de ladite partie de mise en prise (6) dudit élément mâle (2) et se mettre en prise avec ladite partie de mise en prise (6) dans une position de couplage, dans lequel, pour coupler ou retirer ledit élément mâle (2) avec / dudit élément femelle (1), avec lesdits moyens de couplage qui se trouvent dans ledit espace interne (4), ladite paire d'éléments de manipulation (3) est agencée pour pouvoir se rétracter de la position de couplage dans laquelle lesdites parties (14) desdits éléments de manipulation (3) sont entrées dans ladite région de cheminement (X) dans une position dégagée dans laquelle elles sont dégagées de ladite région de cheminement (X) ;
**caractérisé en ce que** :
lesdits éléments de manipulation (3) sont chacun un corps solidaire, comprenant une base de manipulation et une patte, lesdits éléments de manipulation (3) étant partiellement reçus à l'intérieur dudit espace interne et partiellement exposés à l'extérieur dudit élément femelle (1), lesdits éléments de manipulation (3) étant insérés dans l'élément femelle (1) à partir des côtés opposés, et moyennant quoi la rétractation des éléments de manipulation (3) de la position de couplage est agencée pour se produire lors de la poussée de leurs bases de manipulation.

2. Connecteur selon la revendication 1, dans lequel les éléments de manipulation sont disposés indépendamment les uns des autres.

3. Connecteur selon la revendication 1 ou la revendication 2, dans lequel lesdites parties (14) respectives desdits éléments de manipulation (3) sont construites et agencées pour entrer dans ladite région de cheminement (X) dans des directions vers l'intérieur opposées respectives à partir d'une paroi périphérique interne dudit élément femelle (1) et sont mobiles dans des directions vers l'extérieur opposées vers ladite paroi périphérique interne afin de pouvoir être rétractées de ladite position de couplage.

4. Connecteur selon l'une quelconque des revendications 1 à 3, dans lequel ladite paire d'éléments de manipulation (3) est formée séparément dudit élément femelle (1) et est retenue par des parties d'échelon (13) respectives prévues sur une paroi de guidage périphérique (12) dudit espace interne (4).

5. Connecteur selon l'une quelconque des revendications 1 à 4, dans lequel chaque élément de ladite paire d'éléments de manipulation (3) est prévu avec une partie élastique (9) grâce à laquelle lesdits éléments de manipulation (3) sont maintenus normalement dans ladite position de couplage.

6. Connecteur selon la revendication 5, dans lequel pour coupler et retirer ledit élément mâle (2), ladite paire d'éléments de manipulation (3) est mobile afin de résister à la force élastique desdites parties élastiques (9).

7. Connecteur selon la revendication 1 ou la revendication 6, dans lequel lesdits éléments de manipulation (3) sont mobiles de manière rotative et dans des directions vers l'extérieur afin de pouvoir être rétractés de ladite position de couplage.

8. Connecteur selon la revendication 7, dans lequel chaque élément desdits éléments de manipulation (3) est prévu avec une partie d'assemblage élastique (207) et une partie de guidage élastique (208) et la force de poussée élastique fournie par lesdites parties de guidage et d'assemblage élastiques (207, 208) permet auxdits éléments de manipulation (3) de pouvoir être maintenus dans ladite position de couplage.

9. Connecteur selon la revendication 8, dans lequel pour coupler et retirer ledit élément mâle (2), lesdits éléments de manipulation (3) sont mobiles contre ladite force élastique desdites parties élastiques (207, 208) afin de pouvoir être rétractés de ladite position de couplage.

10. Connecteur selon la revendication 1, dans lequel lesdites parties (314) respectives desdits éléments de manipulation (3) sont construites et agencées afin de pouvoir pénétrer dans ladite région de cheminement (X) sur environ un demi-arc circulaire de celle-ci et se mettre en prise avec ladite partie de mise en prise (6) de l'élément mâle (2).

11. Connecteur selon la revendication 10, dans lequel chacun desdits éléments de manipulation (3) est prévu avec une partie d'assemblage élastique (307) et une partie anti-retrait (308) et peut être maintenu dans ladite position de couplage au moyen de la force élastique fournie par ladite partie d'assemblage (307).

12. Connecteur selon la revendication 10 ou la revendication 11, dans lequel chaque élément desdits éléments de manipulation (3) peut être positionné mutuellement au moyen d'une butée de sa partie d'extrémité interne respective sur l'autre élément desdits éléments de manipulation (3).

13. Connecteur selon l'une quelconque des revendications précédentes, dans lequel chaque élément desdits éléments de manipulation (3) est prévu avec une partie d'assemblage (114) pour se mettre en prise avec ladite partie de mise en prise (6) de l'élément mâle (2) pour maintenir un état de couplage entre lesdits éléments femelle et mâle (1, 2) et chacune desdites parties d'assemblage (114) est prévue avec une partie de butée (114a) pour limiter un mouvement vers l'extérieur de ladite partie d'assemblage (114) dans la position de dégagement au niveau d'une position axialement déplacée dans l'état de couplage sous une pression de fluide.

14. Connecteur selon la revendication 13, dans lequel ladite partie de butée (114a) est formée comme un échelon et ledit élément femelle (1) est prévu avec une partie d'arrêt de mouvement (116) pour se mettre en prise avec ladite partie de butée (114a) afin d'empêcher ledit mouvement vers l'extérieur de chacune desdites parties d'assemblage (114).

15. Connecteur selon la revendication 13, dans lequel chacune desdites parties de butée (114a) est formée comme une rampe et, suite au mouvement axial de ladite partie d'assemblage (114) résultant d'une pression de fluide exercée à l'intérieur du connecteur, chacune desdites parties d'assemblage (114) se déplace vers l'intérieur le long de ladite rampe et est poussée contre la partie de mise en prise (6) dudit élément mâle (2).

16. Connecteur selon l'une quelconque des revendications précédentes, dans lequel ladite partie de mise en prise (6) dudit élément mâle (2) est une partie en saillie.
